# EUROPÄISCHE PATENTSCHRIFT

(11) **EP 2 288 513 B1**
(45) Veröffentlichungstag und Bekanntmachung des Hinweises auf die Patenterteilung: **21.10.2015**
(21) Anmeldenummer: 09761440.8
(22) Anmeldetag: 06.06.2009
(51) Int. Cl.: B60N 2/225

(54) **VERSTELLBESCHLAG**
ADJUSTMENT FITTING
FERRURE DE RÉGLAGE

(30) Priorität: 13.06.2008 DE 102008028096
(43) Veröffentlichungstag der Anmeldung: 02.03.2011
(60) Teilanmeldung: 12002683.6
(73) Patentinhaber: Brose Fahrzeugteile GmbH & Co. Kommanditgesellschaft Coburg, 96450 Coburg (DE)
(72) Erfinder: KRÜGER, Frieder, 96450 Coburg (DE); BLINZLER, André, 96271 Grub am Forst (DE); HARTLEB, Stephanie, 96279 Weidhausen (DE); SILLER, Jürgen, 95472 Rödental (DE); ZELLMANN, Michael, 96120 Bischberg (DE); WEISS, Matthias, 96472 Rödental (DE); MÖLLER, Volker, 96450 Coburg (DE)
(74) Vertreter: FDST Patentanwälte
(86) Internationale Anmeldenummer: PCT/EP2009/004087
(87) Internationale Veröffentlichungsnummer: WO 2009/149877

(56) Entgegenhaltungen:
- DE-A1- 10 144 840
- DE-B3-102005 053 312
- DE-B3-102005 056 728

## Beschreibung

Die Erfindung betrifft einen Verstellbeschlag, insbesondere für einen Fahrzeugsitz, mit einem ersten Beschlagteil und einem relativ zum ersten Beschlagteil um eine Drehachse drehverstellbaren zweiten Beschlagteil, wobei dem ersten Beschlagteil ein Außenrad mit einer Innenverzahnung zugeordnet ist, in welches ein dem zweiten Beschlagteil zugeordnetes Innenrad mit einer Außenverzahnung nach Art eines Taumelgetriebes eingesetzt ist, und wobei das Innenrad zur Drehachse einen exzentrischen Aufnahmeraum bildet, mit einem in den exzentrischen Aufnahmeraum drehbar eingesetzten Exzenter, mit einer Antriebswelle zum Antrieb des Exzenters, und mit einer Abdeckkappe zur Abdeckung des offenen Aufnahmeraums.

Bei einem derartigen Verstellbeschlag sind das erste Beschlagteil und das zweite Beschlagteil nach Art eines Taumelgetriebes zusammengefügt, wobei sich bei Antrieb des Exzenters das Innenrad taumelnd über seine Außenverzahnung an der Innenverzahnung des Außenrads abrollt. Die Anzahl der Zähne der Außenverzahnung ist von der Anzahl der Zähne der Innenverzahnung verschieden. Bei einem vollständigen Umlauf des Exzenters resultiert eine Relativdrehung des Innenrads gegenüber dem Außenrad um die Zahndifferenz. Ein Verstellbeschlag mit Taumelgetriebe hat sich in der Fahrzeugtechnik zur Verstellung der Lehne gegenüber dem Sitzunterteil eines Fahrzeugsitzes durchgesetzt. Ein Taumelgetriebe ist mit vergleichsweise wenigen mechanischen Bauteilen zu verwirklichen und ermöglicht bei zugleich flacher Bauweise eine zur Verstellung gewünschte Übersetzung.

Ein Verstellbeschlag der eingangs genannten Art ist beispielsweise aus der DE 10 2005 053 312 B3 bekannt. Die dort gezeigte Abdeckkappe ist mittels einer radial flexiblen Dichtlippe am Umfang eines Drehverstellglieds verclipsbar und dichtet den Aufnahmeraum unter einer axialen Vorspannung gegen ein Beschlagteil ab. Durch die radial flexible Dichtlippe soll ein Verdrehen der Abdeckkappe gegenüber dem Beschlagteil und somit das Auftreten von Undichtigkeit vermieden werden. Die Abdeckkappe verdreht sich vielmehr gegenüber dem Drehverstellglied.

Auch aus der DE 101 44 840 B4 ist für einen Verstellbeschlag der eingangs genannten Art eine Abdeckkappe des Aufnahmeraums bekannt. Dabei ist die Abdeckkappe aus einem Dichtring und einer Abdeckscheibe gebildet, wobei der Dichtring mit seinem Außenrand unter axialer Vorspannung gegen ein Beschlagteil dichtet. Dort schleift der Dichtring am Beschlagteil bei einer Betätigung des Verstellbeschlags.

Weiter ist aus der DE 10 2005 056 728 B3 ein Verstellbeschlag mit einer Abdeckkappe der genannten Art bekannt. Auch hier deckt der Rand der Abdeckkappe unter einer axialen Vorspannung den exzentrischen Aufnahmeraum ab.

Die bekannten Abdeckkappen zur Abdeckung des exzentrischen Aufnahmeraums dienen dazu, Schmutz und sonstige Verunreinigungen vom Gelenkbereich des Verstellbeschlags abzuhalten. Insbesondere soll bei Lackierarbeiten kein Lack in das Innere des Verstellbeschlags eindringen.

Üblicherweise wird nämlich ein Verstellbeschlag vor seinem Einsatz mittels eines Tauchlackier-Verfahrens, insbesondere mittels eines kathodischen Tauchlackier-Verfahrens, mit Lack beschichtet, um eine höhere Korrosionsbeständigkeit zu erzielen. Dabei sollte ein Eindringen des Lackes in das Innere des Beschlages vermieden werden, da eingedrungener Lack unerwünschterweise die das Getriebe bildenden mechanischen Teile beaufschlagen kann. Unter Umständen kann dies zu einer Funktionseinbuße des Verstellbeschlags führen.

Aufgabe der Erfindung ist es, einen Verstellbeschlag der eingangs genannten Art anzugeben, der eine verbesserte Abdichtung des exzentrischen Aufnahmeraums aufweist.

Diese Aufgabe wird erfindungsgemäß durch einen Verstellbeschlag mit der Merkmalskombination gemäß Anspruch 1 gelöst. Demnach ist die Abdeckkappe exzentrisch zur Drehachse ausgebildet und taucht mit einem axial herabgezogenen Dichtrand in den exzentrischen Aufnahmeraum ein, wobei der Aufnahmeraum unter einer radial nach außen gerichteten Vorspannung des Dichtrands abgedichtet ist.

Die Erfindung löst sich dabei von dem bisherigen Konzept des Standes der Technik, den exzentrischen Aufnahmeraum durch eine flach einem Beschlagteil aufliegende Abdeckkappe abzudichten, die gegen das Beschlagteil unter einer axialen Vorspannung steht. Dadurch, dass die Abdeckkappe zur Drehachse exzentrisch ausgebildet ist, kann sie mit einem herabgezogenen Dichtrand in das Innere des exzentrischen Aufnahmeraums eintauchen und diesen unter einer radialen Vorspannung abdichten. Die Abdeckkappe ist hierbei in ihrer Form im Wesentlichen dem Umfang des Aufnahmeraums angeglichen. Insbesondere ist die Abdeckkappe als eine gegenüber der Drehachse exzentrisch versetzte Scheibe ausgebildet. Der unter einer radial nach außen gerichteten Vorspannung stehende Dichtrand, der insbesondere als eine mit einer Kontur ausgestattete Dichtlippe ausgebildet sein kann, bildet sowohl eine statische Dichtung im Falle einer Lackierung als auch eine dynamische Dichtung im Falle einer Betätigung des Verstellbeschlags. Im letzteren Fall gleitet der Dichtrand der Innenseite des exzentrischen Aufnahmeraums entlang.

Dadurch, dass von einer axialen Vorspannung der Abdeckkappe gegen ein Beschlagteil Abstand genommen ist, bedarf es zur Abdichtung keiner Clips- oder Rastmechanik, mit der die Abdeckkappe beispielsweise an der Antriebswelle zur Ausbildung der axialen Vorspannung gegengelagert wird. Weiter bietet die Erfindung den bedeutenden Vorteil, dass keine variantenspezifische Anpassung der Abdeckkappe im Falle von unterschiedlichen axialen Höhen des Verstellbeschlags erforderlich ist, was beispielsweise durch unterschiedlich dicke Adapter bewirkt sein kann. Im Falle einer mittels axialer Vorspannung abdichtenden Abdeckkappe muss diese variantenspezifisch hergestellt werden, um gegen verschieden dicke Adapter abzudichten, die dem Außen- oder dem Innenrad angebunden sind. Die vorliegend genannte Abdeckkappe taucht hiergegen mit der axial ausgerichteten Dichtkante in den exzentrischen Aufnahmeraum hinein, so dass bei entsprechender Länge der Dichtkante problemlos mit einer einzigen Abdeckkappe unterschiedliche axiale Höhen des Verstellbeschlags bzw. unterschiedliche Dicken der Adapter ohne Einbußen der Dichtheit ausgeglichen werden. Die radiale Dichtung wird von einem axialen Versatz nicht berührt. Die Erfindung bietet insofern die Möglichkeit einer Verringerung der Variantenvielfalt, was mit einer nicht unbeachtlichen Kosteneinsparung verbunden ist.

Die Abdeckkappe und der Dichtrand sind vorzugsweise aus Kunststoff gefertigt. Bevorzugt ist hierbei der Dichtrand der Abdeckkappe, insbesondere mittels eines Zwei-Komponenten-Spritzverfahrens, angespritzt. Dadurch wird der Dichtrand unverlierbar mit der Abdeckkappe verbunden.

Als Material für den Dichtrand eignet sich grundsätzlich jedes Elastomer, solange es genügend formbeständig ist und insbesondere einem kathodischen Tauchlackierverfahren standhält. Insbesondere sollte das Material Temperaturen bis etwa 200°C standhalten. Als Material ist ein geeigneter Kunststoff oder Gummi vorstellbar. Bevorzugt wird als Material für den Dichtrand ein Polyamid eingesetzt.

In einer weiter bevorzugten Variante des Verstellbeschlags umfasst das Innenrad eine in axialer Richtung über die Außenverzahnung hinaus verlängerte Innenwand, wobei der Dichtrand in die Innenwand eintaucht und den Aufnahmeraum unter einer gegen die Innenwand gerichteten radialen Vorspannung abdichtet. Durch das Vorsehen einer solchen Innenwand ist eine besonders leichte Anbindung eines Adapters ermöglicht, da das Innenrad hierdurch sehr leicht zugänglich wird. Zudem bietet diese konstruktive Ausgestaltung eine weitere Möglichkeit, undabhängig von den für verschiedene Fahrzeugsitze notwendigen Adaptern zu werden. Der Aufnahmeraum wird mittels der gegen die Innenwand (im Fachjargon auch Durchzug genannt) des Innenrads gepresste Dichtkante nach außen abgedichtet. Die über die Außenverzahnung hinaus verlängerte Innenwand bietet den weiteren Vorteil, dass der Adapter zur Befestigung in axialer Richtung verschoben werden kann. Auch dies ermöglicht eine kundenspezifische Variation des Verstellbeschlags, ohne dass dessen Bauteile variantenspezifisch adaptiert werden müssten.

Vorteilhafterweise ist die Antriebswelle als ein durchgehender Lagerzapfen ausgebildet. Hierdurch wird die Montage des Verstellbeschlags erleichtert. Ein solcher Lagerzapfen bietet zudem die Möglichkeit, die Bauteile des Verstellbeschlags in axialer Richtung zusammenzuhalten.

Bevorzugt sind die Abdeckkappe und der Lagerzapfen einstückig ausgebildet. Gegenüber bekannten Abdeckkappen gemäß Stand der Technik entfällt bei dieser Ausgestaltung eine notwendige Anbindung der Abdeckkappe an einem Verstellglied, insbesondere eine Verclipsung oder eine Verrastung. Eine solche einstückige Ausgestaltung ist nunmehr ermöglicht, da die Abdichtung des Aufnahmeraums in radialer Richtung erfolgt. Durch die einstückige Ausgestaltung sind weiter die Herstellkosten verringert. Ebenfalls ist die Montage des Verstellbeschlags vereinfacht.

In einer weiter bevorzugten Ausgestaltung des Verstellbeschlags umfasst das Außenrad einen Boden mit einer zentralen Bohrung, in der der Lagerzapfen mit seinem der Abdeckkappe abgewandten Ende gelagert ist, wobei der Lagerzapfen gegen den Boden mit einer Sicherungsscheibe gehalten ist, und wobei die Sicherungsscheibe einen Dichtrand umfasst, der den radialen Spalt zwischen dem Lagerzapfen und dem Boden unter einer axial gegen den Boden gerichteten Vorspannung abdeckt. Die Sicherungsscheibe wirkt demnach als Abdeckung der "Rückseite" des Verstellbeschlags, da sie den rückwärtigen radialen Spalt zwischen dem Lagerzapfen und dem Boden des Außenrads abdeckt. Da die Sicherungsscheibe den Verstellbeschlag hält, ist diese vorteilhafterweise durch ein Verstärkungselement, insbesondere ein eingelagertes Stahlelement, mechanisch gestützt. Der Dichtrand der Sicherungsscheibe kann wieder aus einem geeigneten Elastomer bestehen.

Bevorzugt ist der Boden auf der der Sicherungsscheibe zugewandten Seiten tellerförmig eingesenkt. Zum einen wird hierdurch die axiale Höhe des Verstellbeschlags verringert. Zum anderen ist hierdurch eine sichere rückwärtige Abdichtung des Aufnahmeraums sichergestellt.

Für eine stabile Lagerung umfasst der Boden einen die Bohrung umlaufenden Kragenzug, in dem der Lagerzapfen gelagert ist. Über die in axialer Richtung vergrößerte Auflagefläche des Kragenzugs wird die Lagerung des Lagerzapfens stabilisiert. Insbesondere wird ein Verkippen des Lagerzapfens sicher vermieden.

In einer auch eigenständig erfinderischen Ausgestaltung ist in den Axialspalt zwischen den Beschlagteilen eine Zentraldichtung eingesetzt. Diese Idee geht von der bisherigen Praxis aus, dauerhafte Abdeckkappen zur Abdichtung der offenen axialen Zugänge zum Innenraum vorzusehen, und für die Abdichtung von Spalten des Verstellbeschlags, die ebenfalls einen Zugang zum Aufnahmeraum bilden, gegen das Eindringen von Lack Fett zu verwenden. Bei dieser Praxis kann es aber bei der Vorbehandlung des Verstellbeschlags bereits zu einer Kontamination des Innenraums des Verstellbeschlags mit Spülflüssigkeit kommen. Während der Tauchlackierung selbst kann dann unerwünschterweise Fett ausgespült werden, so dass dennoch Lack eindringen kann. Zudem führt ausgetretenes Fett zu Qualitätseinbußen beim Lackierprozess. Ferner kann im Beschlag nur "lackverträgliches" Fett eingesetzt werden, was mit Kostennachteilen verbunden ist.

Es wird nun erkannt, dass sich der zur Relativdrehung notwendige Axialspalt zwischen den Beschlagteilen, der zwangsläufig einen Zugang zum exzentrischen Aufnahmeraum des Verstellbeschlags bildet, für eine dauerhafte Abdichtung eignet. Wird in den Axialspalt zwischen dem ersten und dem zweiten Beschlagteil eine Zentraldichtung eingesetzt, so wird der Zugang zu dem äußeren Ringraum zwischen dem Innenrad und dem Außenrad dichtend abgeschlossen. Ein Eindringen von Schmutz und insbesondere von Lack während des Lackierprozesses über den äußeren Ringraum zwischen dem Innenrad und dem Außenrad ist somit sicher und dauerhaft verhindert, ohne dass die geschilderte Problematik einer Abdichtung mittels Fett auftritt. Die Beschlagteile gleiten dabei bei einer Verstellung des Beschlags der Zentraldichtung entlang. Die Zentraldichtung wirkt somit gleichermaßen als statische wie als dynamische Dichtung. Die Erfindung weist somit eine Möglichkeit auf, eine weitergehende Abdichtung der Getriebeteile des Verstellbeschlags zu erzielen, um sicher ein Eindringen von Schmutz und insbesondere von Lack während des Lackierprozesses in den Aufnahmeraum zu verhindern.

Als Material für die Zentraldichtung eignet sich grundsätzlich jedes Elastomer, solange es genügend formbeständig ist und insbesondere einem kathodischen Tauchlackierverfahren standhält. Insbesondere sollte das Material Temperaturen bis etwa 200°C standhalten. Als Material ist ein geeigneter Kunststoff oder Gummi vorstellbar. Bevorzugt wird als Material für die Zentraldichtung ein Polyamid eingesetzt. Die Zentraldichtung kann einen Teil des Axialspalts oder diesen vollständig ausfüllen.

Wie erwähnt werden zur Montage des Verstellbeschlags an spezifische Fahrzeugsitze dem Außen- und/oder dem Innenrad typspezifische Adapter bzw. Adapterbleche beispielsweise durch Schweißung, insbesondere durch Laserschweißung, angebunden. Insbesondere ist bevorzugt dem Innenrad umlaufend ein Adapterblech angebunden, welches mit einem Axialspalt vom Außenrad beabstandet ist. Bevorzugt ist hierbei die Zentraldichtung in den Axialspalt zwischen dem Adapter und dem Außenrad eingesetzt.

In einer vorteilhaften Ausgestaltung ist die Zentraldichtung scheibenförmig mit einem äußeren Dichtrand ausgebildet, wobei der äußere Dichtrand einen im Wesentlichen Y-förmigen Querschnitt mit radial nach außen gerichteten und axial auseinander strebenden Schenkeln aufweist, die sich zwischen das erste und das zweite Beschlagteil, insbesondere zwischen das Außenrad und den Adapter, spreizen. Durch diese Ausgestaltung wird Schmutz und insbesondere Lack sicher vor einem Eindringen in den genannten Axialspalt abgehalten. Der Innenraum des Verstellbeschlags ist gesichert.

Weiter bevorzugt umfasst das Außenrad eine sich in axialer Richtung über die Innenverzahnung hinaus verlängerte Außenwand, die mit einem radial einwärts gerichteten Kragen die Außenverzahnung des Innenrads übergreift, wobei die Zentraldichtung einen inneren axialen Dichtrand aufweist, der in den Kragen eingesetzt ist. Die verlängerte Außenwand und der Übergriff über die Außenverzahnung des Innenrads können insbesondere auch durch eine zweiteilige Ausgestaltung des Außenrads erfolgen. Hierbei wird das Außenrad an der Innenverzahnung geteilt, so dass gewissermaßen eine Ober- und eine Unterschale entstehen. Zwischen der Ober- und der Unterschale ist dann die Außenverzahnung des Innenrads sicher gelagert bzw. geführt. Andererseits kann der Übergriff in der verlängerten Außenwand auch mittels eines Halteelements erfolgen, welches der Innenverzahnung des Innenrads in axialer Richtung in der Außenwand des Außenrads nachgeführt und an entsprechender Position mit der Außenwand verbunden, insbesondere verschweißt ist. Dies bietet die zusätzliche Möglichkeit der Einstellung des Axialspiels zwischen dem Innen- und dem Außenrad.

Mit dem inneren axialen Dichtrand ist die Zentraldichtung dann in die Außenwand des Außenrads eingesetzt. Damit werden ein Verdrehen und ein Verrutschen der Zentraldichtung gegenüber dem Außenrad verhindert. Auch die Montage ist hierdurch vereinfacht.

Zweckmäßigerweise läuft der innere axiale Dichtrand der Zentraldichtung in einem radial nach innen gekrümmten Ende aus. Auf diese Weise wird der Verzahnungsbereich zusätzlich gegen Schweißspritzer geschützt.

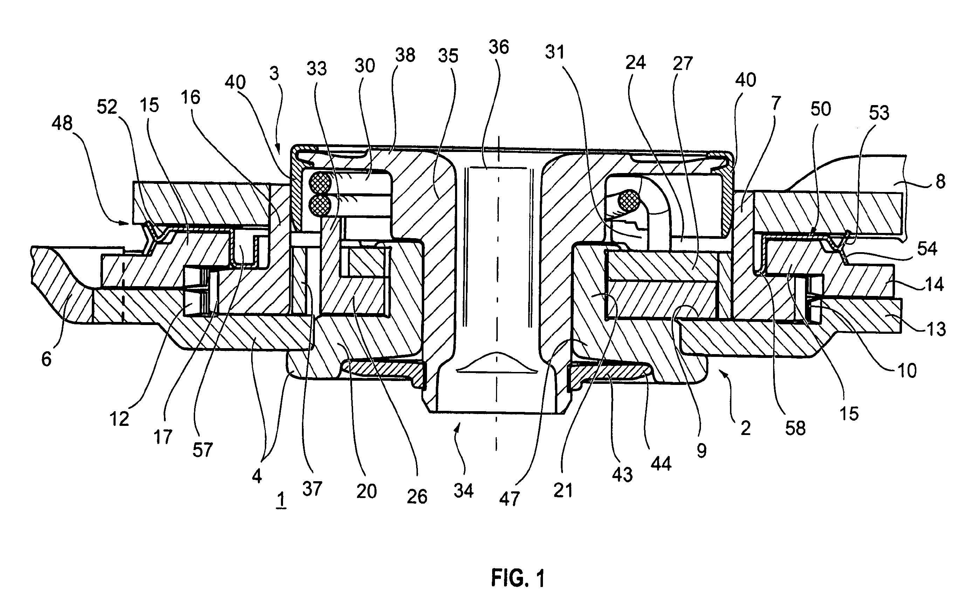

Ein Ausführungsbeispiel der Erfindung wird anhand einer Zeichnung näher erläutert. Dabei zeigt die einzige Figur 1 in einem Querschnitt einen Verstellbeschlag mit einer Abdichtung des exzentrischen Aufnahmeraums.

Aus der Querschnittsdarstellung gemäß Fig. 1 wird ein Verstellbeschlag 1 ersichtlich, der ein erstes Beschlagteil 2 sowie ein zweites Beschlagteil 3 umfasst, die relativ zueinander um eine Drehachse drehverstellbar sind. Das erste Beschlagteil 2 besteht aus einem Außenrad 4, welchem zur späteren Montage an einer Sitzlehne ein entsprechender Lehnenadapter 6, insbesondere mittels einer Schweißung, angebunden ist. Das zweite Beschlagteil 3 umfasst ein Innenrad 7 sowie einen mit diesem verbundenen Sitzadapter 8 zur Anbindung an ein Sitzunterteil.

Das Außenrad 4 ist als ein Hohlrad mit einem Boden 9 und einer Außenwand 10 ausgebildet, wobei an der Außenwand 10 eine Innenverzahnung 12 angebracht ist. Das Außenrad 4 ist entlang der Innenverzahnung 12 geteilt und aus einer ersten Schale 13 und einer zweiten Schale 14 zusammengesetzt. Die zweite Schale 14 übergreift mit einem umlaufenden Kragen 15 die einer hochgezogenen Innenwand 16 des Innenrads 7 angebrachte Außenverzahnung 17. Auf diese Weise wird das Innenrad 7 zwischen der ersten Schale 13 und der zweiten Schale 14 des Außenrads 4 sicher axial gehalten. Weiter weist das Außenrad 4 einen separat eingesetzten Dom 20 auf, der einen umlaufenden Kragenzug 21 trägt. Die Ausgestaltung eines separaten Doms 20 bietet die Möglichkeit, die unterschiedlichen tribologischen Eigenschaften hinsichtlich Lagerung und Getriebe durch entsprechende Materialauswahl zu optimieren.

Zwischen dem Kragenzug 21 und der hochgezogenen Innenwand 16 des Innenrads 7 ist ein exzentrischer, ringförmiger Aufnahmeraum 24 gebildet, in den zum Antrieb des Innenrads 7 ein erster Teilexzenter 26 und ein zweiter Teilexzenter 27 eingesetzt sind. Die beiden Teilexzenter 26,27 bilden unter Verdrehung eine variable Gesamtexzentrizität aus, und sind mittels eines Federelements 30 zur Ausbildung einer maximalen Gesamtexzentrizität vorgespannt. In dieser vorgespannten Ausgangslage wird das Innenrad 7 mit seiner Außenverzahnung 17 in Richtung der größten Exzentrizität gegen die Innenverzahnung 12 des Außenrads 4 spielfrei gedrückt, so dass ein Ablaufen der Beschlagteile 2,3 zueinander nicht ermöglicht ist.

Zur Betätigung der Teilexzenter 26,27 ist weiter in den exzentrischen Aufnahmeraum 24 eine Mitnehmerscheibe 31 eingesetzt, in die Mitnehmernasen 33 der jeweiligen Teilexzenter 26,27 eingreifen. Die Mitnehmerscheibe 31 ist drehfest mit der zentralen Antriebswelle 34 verbunden, die vorliegend als ein durchgehender Lagerzapfen 35 ausgebildet ist. Wird der Lagerzapfen 35 angetrieben bzw. verdreht, so werden über die drehfest angebundene Mitnehmerscheibe 31 die Teilexzenter 26,27 entgegen der Vorspannung des Federelements 30 verdreht, so dass nunmehr das Innenrad 7 dem Außenrad 4 unter Spiel anliegt. Der aus den Teilexzentern 26,27 bestehende Gesamtexzenter kann verdreht werden, wobei sich das Innenrad 7 über seine Außenverzahnung 17 an der Innenverzahnung 12 des Außenrads 4 abrollt. Bei einem vollen Umlauf des Exzenters ergibt sich eine Relativdrehung des Innenrads 7 gegenüber dem Außenrad 4 entsprechend einer Zahndifferenz zwischen der Außenverzahnung 17 und der Innenverzahnung 12.

Zum Antrieb des Lagerzapfens 35 weist dieser an seiner oberen Seite eine Vierkantöffnung 36 auf. Auf der gegenüberliegenden Seite ist eine Aufnahme für eine weiterführende Welle vorgesehen, die gegebenenfalls zum Antrieb eines entsprechenden Verstellbeschlags auf der anderen Seite des Fahrzeugsitzes vorgesehen ist.

Zur Verringerung der Reibung zwischen den Teilexzentrizitäten 26,27 und dem Innenrad 7 ist in den Innenumfang des Innenrads 7 eine Gleitlagerbuchse 37 eingesetzt.

Der Lagerzapfen 35 ist einstückig mit einer Abdeckkappe 38 ausgebildet, die den exzentrischen Aufnahmeraum 24 nach außen abdichtet. Die Abdeckkappe 38 ist scheibenförmig ausgebildet und radial gegenüber der Antriebswelle 34 versetzt. Mit anderen Worten ist die Abdeckkappe 38 exzentrisch ausgebildet. Die exzentrische Abdeckkappe 38 umfasst weiter einen axial nach unten gezogenen Dichtrand 40, der in den exzentrischen Aufnahmeraum 24 eintaucht. Über eine radial nach außen gerichtete Vorspannung gegen die Innenwand 16 des Innenrads 7 dichtet der umlaufende Dichtrand 40 den exzentrischen Aufnahmeraum 24 nach außen ab. Der Dichtrand 40 ist aus einem spritzbaren Elastomer gefertigt und dem Lagerzapfen 35 mittels eines Zwei-Komponenten-Spritzverfahrens angespritzt. Man erkennt, dass die axiale Länge des Dichtrands 40 so bemessen ist, dass mit ein und demselben Lagerzapfen 35 verschiedene Varianten des Verstellbeschlags 1, die sich in der axialen Höhe unterscheiden, abdichtet. Ein axialer Versatz des Dichtrands 40 gegenüber der Innenwand 16 innerhalb eines gewissen Rahmens verändert die Dichtfunktion nicht. Insbesondere gilt dies auch für den Fall, dass der axiale Dichtrand 40 nicht gegen die Innenwand 16 des Innenrads 7 sondern direkt gegen einen umlaufenden Rand des Sitzadapters 8 abdichtet.

Auf der der Abdeckkappe 38 abgewandten Seite ist der Lagerzapfen 35 mittels einer Sicherungsscheibe 43 an dem Verstellbeschlag 1 gehalten. Der axiale Zusammenhalt der Beschlagteile 2,3 wird durch das als Hohlrad ausgebildete Außenrad 4 bewerkstelligt. Die Sicherungsscheibe 43 weist einen umlaufenden Dichtrand 44 auf und ist in einer tellerförmigen Einsenkung 47 des Bodens 9 bzw. des separaten Doms 20 gehalten. Über eine Klipsverbindung der Sicherungsscheibe 43 an dem Lagerzapfen 35 wird eine axiale Vorspannung des Dichtrands 44 gegenüber dem Boden 9 erzielt. Die Sicherungsscheibe 43 hält somit nicht nur den Lagerzapfen 35 in dem Verstellbeschlag 1, sondern dichtet zudem den Radialspalt zwischen dem Lagerzapfen 35 und dem Dom 20 ab. Auch auf dieser Seite ist somit ein Eindringen von Schmutz bzw. ein Eindringen von Lack während des Lackierprozesses sicher verhindert.

Der Sitzadapter 8 ist in Form eines Sitzadapterblechs umlaufend der Innenwand 16 des Innenrands 7 angebunden, insbesondere angeschweißt. Dabei ist der Lehnenadapter 6 axial gegenüber dem Außenrad 4 beabstandet, um eine Relativdrehung zueinander zu ermöglichen. In den resultierenden Axialspalt 48 zwischen dem Sitzadapter 8 und dem Außenrad 4 ist weiter eine scheibenförmige Zentraldichtung 50 eingesetzt. Auf diese Weise wird der Innenraum des Verstellbeschlags 1 vollständig nach außen abgedichtet. Auch über den äußeren Ringspalt zwischen dem Innenrad 7 und dem Außenrad 4 kann weder Schmutz noch Lack in den inneren Getriebeteil gelangen.

Die scheibenförmige Zentraldichtung 50 weist weiter einen äußeren Dichtrand 52 mit einem im Wesentlichen Y-förmigen Querschnitt auf. Dabei erstrecken sich die beiden Schenkel 53,54 des äußeren Dichtrands 52 radial nach außen und spreizen sich axial gegen den Sitzadapter 8 bzw. gegen das Außenrad 4 ab. Auf diese Weise wird sowohl Schmutz als auch insbesondere Lack sicher an einem Eindringen in den Innenraum des Verstellbeschlags 1 über den Axialspalt 48 gehindert.

Ferner weist die Zentraldichtung 50 einen inneren axialen Dichtrand 57 auf, mit dem sie in den Kragen 15 des Außenrads 4 eingesetzt ist. Hierdurch wird ein Verdrehen der Zentraldichtung 50 gegenüber dem Außenrad 4 verhindert. Der innere Dichtrand 57 weist ein nach innen gekrümmtes Ende 58 auf. Hierdurch ist das innere Getriebe des Verstellbeschlags 1 während des Herstellungsprozesses vor Schweißspritzern geschützt.

**Bezugszeichenliste**

| | | | |
|---|---|---|---|
| 1 | Verstellbeschlag | 44 | Dichtrand |
| 2 | erstes Beschlagteil | 47 | tellerförmige Einsenkung |
| 3 | zweites Beschlagteil | 48 | Axialspalt Adapter/Außenrad |
| 4 | Außenrad | 50 | Zentraldichtung |
| 6 | Lehnenadapter | 52 | äußerer Dichtrand |
| 7 | Innenrad | 53 | erster Schenkel |
| 8 | Sitzadapter | 54 | zweiter Schenkel |
| 9 | Boden | 57 | innerer Dichtrand |
| 10 | Außenwand | 58 | gekrümmtes Ende |
| 12 | Innenverzahnung | | |
| 13 | erste Schale | | |
| 14 | zweite Schale | | |
| 15 | Kragen | | |
| 16 | Innenwand | | |
| 17 | Außenverzahnung | | |
| 20 | Dom | | |
| 21 | Kragenzug | | |
| 24 | exzentrischer Aufnahmeraum | | |
| 26 | erster Teilexzenter | | |
| 27 | zweiter Teilexzenter | | |
| 30 | Federelement | | |
| 31 | Mitnehmerscheibe | | |
| 33 | Mitnehmernase | | |
| 34 | Antriebswelle | | |
| 35 | Lagerzapfen | | |
| 36 | Vierkantöffnung | | |
| 37 | Gleitlagerbuchse | | |
| 38 | Abdeckkappe | | |
| 40 | Dichtrand | | |
| 43 | Sicherungsscheibe | | |

## Patentansprüche

1. Verstellbeschlag (1), insbesondere für einen Fahrzeugsitz, mit einem ersten Beschlagteil (2) und mit einem relativ zum ersten Beschlagteil (2) um eine Drehachse drehverstellbaren zweiten Beschlagteil (3) ,wobei dem ersten Beschlagteil (2) ein Außenrad (4) mit einer Innenverzahnung (12) zugeordnet ist, in welches ein dem zweiten Beschlagteil (3) zugeordnetes Innenrad (7) mit einer Außenverzahnung (17) nach Art eines Taumelgetriebes eingesetzt ist, und wobei das Innenrad (7) zur Drehachse einen exzentrischen Aufnahmeraum (24) bildet, mit einem in den exzentrischen Aufnahmeraum (24) drehbar eingesetzten Exzenter, mit einer Antriebswelle (34) zum Antrieb des Exzenters, und mit einer Abdeckkappe (38) zur Abdeckung des offenen Aufnahmeraums (24),
**dadurch gekennzeichnet,**
**dass** die Abdeckkappe (38) exzentrisch zur Drehachse ausgebildet ist, mit einem axial herabgezogenen Dichtrand (40) in den exzentrischen Aufnahmeraum (24) eintaucht und den Aufnahmeraum (24) unter einer radial nach außen gerichteten Vorspannung des Dichtrands (40) abdichtet.

2. Verstellbeschlag (1) nach Anspruch 1,
**dadurch gekennzeichnet,**
**dass** der Dichtrand (40) der Abdeckkappe (38) angespritzt ist.

3. Verstellbeschlag (1) nach Anspruch 1 oder 2,
**dadurch gekennzeichnet,**
**dass** das Innenrad (7) eine in axialer Richtung über die Außenverzahnung (17) hinaus verlängerte Innenwand (16) umfasst, wobei der Dichtrand (40) in die Innenwand (16) eintaucht und den Aufnahmeraum (24) unter einer gegen die Innenwand (16) gerichteten, radialen Vorspannung abdichtet.

4. Verstellbeschlag (1) nach einem der vorhergehenden Ansprüche,
**dadurch gekennzeichnet,**
**dass** die Antriebswelle (34) als ein durchgehender Lagerzapfen (35) ausgebildet ist.

5. Verstellbeschlag (1) nach Anspruch 4,
**dadurch gekennzeichnet,**
**dass** die Abdeckkappe (38) und der Lagerzapfen (35) einstückig ausgebildet sind.

6. Verstellbeschlag (1) nach Anspruch 4 oder 5,
**dadurch gekennzeichnet,**
**dass** das Außenrad (4) einen Boden (9) mit einer zentralen Bohrung umfasst, in der der Lagerzapfen (35) mit seinem der Abdeckkappe (38) abgewandten Ende gelagert ist, dass der Lagerzapfen (35) gegen den Boden (9) mit einer Sicherungsscheibe (43) gehalten ist, und dass die Sicherungsscheibe (43) einen Dichtrand (40) umfasst, der den radialen Spalt zwischen dem Lagerzapfen (35) und dem Boden (9) unter einer axial gegen den Boden (9) gerichteten Vorspannung abdeckt.

7. Verstellbeschlag (1) nach Anspruch 6,
**dadurch gekennzeichnet,**
**dass** der Boden (9) auf der der Sicherungsscheibe (43) zugewandten Seite tellerförmig eingesenkt ist.

8. Verstellbeschlag (1) nach Anspruch 5 oder 6,
**dadurch gekennzeichnet,**
**dass** der Boden (9) einen die Bohrung umlaufenden Kragenzug (21) umfasst, in dem der Lagerzapfen (35) gelagert ist.

9. Verstellbeschlag (1) nach einem der vorhergehenden Ansprüche,
**dadurch gekennzeichnet,**
**dass** in einen zwischen dem ersten Beschlagteil (2) und dem zweiten Beschlagteil (3) befindlichen Axialspalt eine Zentraldichtung (50) eingesetzt ist.

10. Verstellbeschlag (1) nach Anspruch 9,
**dadurch gekennzeichnet,**
**dass** dem Innenrad (7) umlaufend ein Adapter (8) angebunden ist, und dass die Zentraldichtung (50) in den resultierenden Axialspalt zwischen dem Adapter (8) und dem Außenrad (4) eingesetzt ist.

11. Verstellbeschlag (1) nach Anspruch 9 oder 10,
**dadurch gekennzeichnet,**
**dass** die Zentraldichtung (50) scheibenförmig mit einem äußeren Dichtrand (52) ausgebildet ist, wobei der äußere Dichtrand (52) einen im Wesentlichen Y-förmigen Querschnitt mit radial nach außen gerichteten und axial auseinander strebenden Schenkeln (53,54) aufweist, die sich zwischen das erste und das zweite Beschlagteil (3 bzw. 4) spreizen.

12. Verstellbeschlag (1) nach einem der Ansprüche 9 bis 11,
**dadurch gekennzeichnet,**
**dass** das Außenrad (4) eine sich in axialer Richtung über die Innenverzahnung (12) hinaus verlängerte Außenwand (10) umfasst, die mit einem radial einwärts gerichteten Kragen (15) die Außenverzahnung (17) des Innenrads (7) übergreift, und dass die Zentraldichtung (50) einen inneren axialen Dichtrand (57) aufweist, der in den Kragen (15) eingesetzt ist.

13. Verstellbeschlag (1) nach Anspruch 12,
**dadurch gekennzeichnet,**
**dass** der innere axiale Dichtrand (57) in einem radial nach innen gekrümmten Ende ausläuft.

## Claims

1. Adjustment fitting (1), in particular for a vehicle seat, having a first fitting part (2) and having a second fitting part (3) which is rotatably adjustable relative to the first fitting part (2) around a rotational axis, wherein an outer wheel (4) having an inner toothing (12) is allocated to the first fitting part (2), into which outer wheel (4) an inner wheel (7) allocated to the second fitting part (3) and having an outer toothing (17) is inserted in the manner of a wobble mechanism, and wherein the inner wheel (7) forms an eccentric receiving space relative to the rotational axis, having a cam which is inserted rotatably into the eccentric receiving space (24), having a drive shaft (34) to drive the cam, and having a covering cap (38) to cover the open receiving space (24),
**characterised in that**
the covering cap (38) is formed eccentrically to the rotational axis, is immersed into the eccentric receiving space (24) with a sealing edge (40) which is pulled down axially, and seals the receiving space (24) under a pre-tensioning of the sealing edge (40) which is directed radially outwards.

2. Adjustment fitting (1) according to claim 1,
**characterised in that** the sealing edge (40) of the covering cap (38) is injection moulded.

3. Adjustment fitting (1) according to claim 1 or 2,
**characterised in that**,
the inner wheel (7) comprises an inner wall (16) which extends beyond the outer toothing (17) in the axial direction, wherein the sealing edge (40) is immersed into the inner wall (16) and seals the receiving space (24) under a radial pre-tensioning which is directed against the inner wall (16).

4. Adjustment fitting (1) according to one of the preceding claims,
**characterised in that**
the drive shaft (34) is formed as a continuous bearing journal (35).

5. Adjustment fitting (1) according to claim 4,
**characterised in that**
the covering cap (38) and the bearing journal (35) are formed in one piece.

6. Adjustment fitting (1) according to claim 4 or 5,
**characterised in that**
the outer wheel (4) comprises a base (9) having a central borehole in which the bearing journal (35) is mounted with its end facing away from the covering cap (38), that the bearing journal (35) is held against the base (9) with a retaining washer (43), and that the retaining washer (43) comprises a sealing edge (40) which covers the radial gap between the bearing journal (35) and the base (9) under a pre-tensioning directed against the base (9).

7. Adjustment fitting (1) according to claim 6,
**characterised in that**
the base (9) is sunk in a disc shape on the side facing towards the retaining washer (43).

8. Adjustment fitting (1) according to claim 5 or 6,
**characterised in that**
the base (9) comprises a collar (21) which circulates the borehole, in which the bearing journal (35) is mounted.

9. Adjustment fitting (1) according to one of the preceding claims,
**characterised in that**
a central seal (50) is inserted into an axial gap located between the first fitting part (2) and the second fitting part (3).

10. Adjustment fitting (1) according to claim 9,
**characterised in that**
an adapter (8) is fastened to the inner wheel (7) circumferentially, and that the central seal (50) is inserted into the resulting axial gap between the adapter (8) and the outer wheel (4).

11. Adjustment fitting (1) according to claim 9 or 10,
**characterised in that**
the central seal (50) is formed to be disc-shaped with an outer sealing edge (52), wherein the outer sealing edge (52) has a substantially Y-shaped cross-section having limbs (53,54) which are directed radially outwards and pull apart from one another axially, and which are spread between the first and the second fitting part (3 and 4).

12. Adjustment fitting (1) according to one of claims 9 to 11,
**characterised in that**
the outer edge (4) comprises an outer wall (10) which extends beyond the inner toothing (12) in the axial direction and which overlaps the outer toothing (17) of the inner wheel (7) with a collar (15) which is directed radially inwards, and that the central seal (50) has an inner, axial sealing edge (57) which is inserted into the collar (15).

13. Adjustment fitting (1) according to claim 12,
**characterised in that**,
the inner, axial sealing edge (57) expires at an end which is curved radially inwards.

## Revendications

1. Mécanisme ou armature de réglage (1), notamment destiné à un siège de véhicule, comprenant une première pièce de mécanisme (2) et une deuxième pièce de mécanisme (3), qui peut être déplacée en rotation par rapport à la première pièce de mécanisme (2) autour d'un axe de rotation, mécanisme
dans lequel à la première pièce de mécanisme (2) est associée une roue extérieure (4) avec une denture intérieure (12), à l'intérieur de laquelle est insérée, à la façon d'une transmission à rotation-oscillation, une roue intérieure (7) avec une denture extérieure (17), associée à la deuxième pièce de mécanisme (3),
et dans lequel la roue intérieure (7) forme un logement d'accueil (24) excentré par rapport à l'axe de rotation, avec un excentrique inséré de manière rotative dans le logement d'accueil excentré (24) et avec un arbre d'entraînement (34) destiné à entraîner l'excentrique, ainsi qu'avec un cabochon de recouvrement (38) destiné à recouvrir le logement d'accueil (24) ouvert,
**caractérisé**
**en ce que** le cabochon de recouvrement (38) est d'une configuration excentrée par rapport à l'axe de rotation, plonge dans le logement d'accueil excentré (24) avec un bord d'étanchéité (40) qui s'étend axialement, et assure l'étanchéité du logement d'accueil (24) sous l'effet d'une précontrainte du bord d'étanchéité (40), dirigée radialement vers l'extérieur.

2. Mécanisme de réglage (1) selon la revendication 1,
**caractérisé**
**en ce que** le bord d'étanchéité (40) du cabochon de recouvrement (38) est rapporté par moulage par injection.

3. Mécanisme de réglage (1) selon la revendication 1 ou la revendication 2,
**caractérisé**
**en ce que** la roue intérieure (7) comporte une paroi intérieure (16) prolongée dans la direction axiale au-delà de la denture extérieure (17), le bord d'étanchéité (40) plongeant dans la paroi intérieure (16) et assurant l'étanchéité du logement d'accueil (24) sous l'effet d'une précontrainte radiale dirigée contre ladite paroi intérieure (16).

4. Mécanisme de réglage (1) selon l'une des revendications précédentes,
**caractérisé**
**en ce que** l'arbre d'entraînement (34) est réalisé sous la forme d'un tourillon de palier (35) traversant.

5. Mécanisme de réglage (1) selon la revendication 4,
**caractérisé**
**en ce que** le cabochon de recouvrement (38) et le tourillon de palier (35) sont réalisés d'un seul tenant.

6. Mécanisme de réglage (1) selon la revendication 4 ou la revendication 5,
**caractérisé**
**en ce que** la roue extérieure (4) comprend un fond (9) avec un alésage central dans lequel est monté le tourillon de palier (35) avec son extrémité opposée à celle où se trouve le cabochon de recouvrement (38), en ce que le tourillon de palier (35) est retenu contre le fond (9) à l'aide d'une rondelle d'arrêt (43), et en ce que la rondelle d'arrêt (43) comporte un bord d'étanchéité (40), qui recouvre l'interstice radial entre le tourillon de palier (35) et le fond (9), sous l'effet d'une précontrainte dirigée axialement contre le fond (9).

7. Mécanisme de réglage (1) selon la revendication 6,
**caractérisé**
**en ce que** le fond (9) présente un lamage en forme de coupelle sur le côté dirigé vers la rondelle d'arrêt (43).

8. Mécanisme de réglage (1) selon la revendication 5 ou la revendication 6,
**caractérisé**
**en ce que** le fond (9) comprend un collet étiré (21) entourant l'alésage et dans lequel est monté le tourillon de palier (35).

9. Mécanisme de réglage (1) selon l'une des revendications précédentes,
**caractérisé**
**en ce que** dans un interstice axial se trouvant entre la première pièce de mécanisme (2) et la deuxième pièce de mécanisme (3), est inséré un joint d'étanchéité central (50).

10. Mécanisme de réglage (1) selon la revendication 9,
**caractérisé**
**en ce qu'**un adaptateur (8) est attaché de manière périphérique à la roue intérieure (7), et en ce que le joint d'étanchéité central (50) est inséré dans l'interstice axial résultant, entre l'adaptateur (8) et la roue extérieure (4).

11. Mécanisme de réglage (1) selon la revendication 9 ou la revendication 10,
**caractérisé**
**en ce que** le joint d'étanchéité central (50) est d'une configuration en forme de disque ou rondelle avec un bord d'étanchéité extérieur (52), le bord d'étanchéité extérieur (52) présentant une section transversale sensiblement en forme de Y avec des ailes (53, 54) orientées radialement vers l'extérieur et ayant tendance à s'écarter axialement l'une de l'autre, et qui s'évasent entre la première et la deuxième pièce de mécanisme (3 respectivement 4).

12. Mécanisme de réglage (1) selon l'une des revendications 9 à 11,
**caractérisé**
**en ce que** la roue extérieure (4) comporte une paroi extérieure (10) prolongée en direction axiale au-delà de la denture intérieure (12), et qui surmonte, avec une collerette (15) dirigée radialement vers l'intérieur, la denture extérieure (17) de la roue intérieure (7), et en ce que le joint d'étanchéité central (50) présente un bord d'étanchéité axial (57) intérieur, qui est inséré dans la collerette (15).

13. Mécanisme de réglage (1) selon la revendication 12,
**caractérisé**
**en ce que** le bord d'étanchéité axial (57) intérieur se termine en une extrémité courbée radialement vers l'intérieur.
